# DEMANDE DE BREVET EUROPEEN

(11) **EP 1 712 602 A2**
(43) Date de publication de la demande: **18.10.2006**
(21) Numéro de dépôt: 06006078.7
(22) Date de dépôt: 24.03.2006
(51) Int. Cl.: C09J 7/02, B32B 3/28

(54) **Feuille à une face adhésive empilable ou enroulable sans film protecteur intermédiaire**

(30) Priorité: 13.04.2005 FR 0503661
(71) Demandeur: MAG INDUSTRIES, 78530 BUC (FR)
(72) Inventeur: Proux, Georges, 78220 Viroflay (FR)
(74) Mandataire: Marchand, André

(57) **Abrégé**

Feuille (1) en un matériau polymère alvéolaire à cellules au moins partiellement fermées, comportant une face (12) au moins partiellement enduite d'une couche de colle (3) et une face (11) non encollée, opposée à la face encollée, la face non encollée (11) présentant un relief comportant une pluralité de sommets (4a) répartis sur au moins une région de la seconde face, pour empêcher que des zones de la seconde face entre les sommets puissent être mis en contact avec la couche de colle déposée sur la première face d'une autre feuille ou de la spire suivante lorsque la feuille est enroulée sur elle-même. Application à la fabrication de pièces en mousse avec une face adhésive, empilables ou enroulables sans film protecteur anti-adhérent.

## Description

La présente invention concerne des pièces réalisées à partir d'une feuille de matière polymère alvéolaire (mousse), présentant une face au moins partiellement encollée, dans le but d'être fixées facilement sur un support.

Elle s'applique notamment, mais non exclusivement à la réalisation de pièces de garnissage, d'étanchéité, d'isolation acoustique ou de protection, utilisées dans les véhicules automobiles, ces pièces pouvant être mises en forme par thermoformage ou thermocompression.

Habituellement, de telles feuilles sont fixées au moyen d'une couche de colle appliquée lors de leur fabrication sur l'une de leurs faces, en cordon, en bande ou recouvrant sensiblement toute la face. A l'issue de leur fabrication, ces feuilles sont empilées pour leur stockage et leur transport, en prévoyant un film protecteur disposé sur la couche de colle pour empêcher celle-ci de se coller sur la feuille adjacente.

Or l'usage d'un tel film contribue par son coût et sa manipulation à augmenter les coûts de fabrication des feuilles. Lors de l'utilisation de ces feuilles, il est nécessaire de retirer le film, ce qui induit également des coûts supplémentaires.

Si l'on supprime l'usage d'un tel film protecteur, il est alors nécessaire d'employer une colle dont le pouvoir adhésif est plus faible, ce qui n'est pas souhaitable dans certaines applications où l'on cherche à fixer les feuilles d'une manière définitive, comme c'est le cas dans l'industrie automobile.

On a également prévu d'appliquer un traitement anti-adhérent sur la face non encollée, par exemple par le dépôt d'un film à base de silicones. Cette opération contribue également à augmenter le coût de fabrication de la feuille. En outre, la couche anti-adhérente augmente d'une manière importante l'inflammabilité de la feuille et la vitesse de propagation des flammes dans la feuille, ce qui la rend peu adaptée à être employée dans les automobiles.

Dans la demande de brevet FR 2 802 938, on a tenté d'apporter une solution à ce problème en utilisant en tant que matière constituant les feuilles une mousse de polypropylène non réticulée et une colle de type acrylique fortement réticulée, sensible à la pression. Il s'avère que cette solution ne donne pas entière satisfaction pour les raisons suivantes. Cette solution ne s'applique qu'aux feuilles en mousse de polypropylène non réticulé, et non pas à d'autres types de mousse polymères.

On peut constater par ailleurs que la séparation des feuilles empilées nécessite une force de traction importante, et peut entraîner des arrachements partiels de la couche de colle, ou d'une couche externe de la face non encollée, qui reste collée sur l'autre feuille. Or de tels arrachements sont à éviter, car ils affectent les propriétés notamment d'étanchéité et d'adhésivité des feuilles. En outre, comme la colle employée est sensible à la pression, il faut éviter qu'une pression trop forte soit exercée sur les feuilles empilées avant leur usage, ce qui implique de prendre des précautions particulières durant le stockage et le transport des feuilles. En outre, le polypropylène non réticulé possède des propriétés de thermoformage et d'étirement inférieures au polypropylène réticulé ou au polyéthylène réticulé, ce qui limite les applications de ces feuilles.

La présente invention a pour but de remédier à ces inconvénients.

Cet objectif est atteint par la prévision d'une feuille en un matériau polymère alvéolaire à cellules au moins partiellement fermées, dont la face non encollée présente un relief comportant une pluralité de sommets pour réduire la surface de contact entre la couche de colle et la face non encollée, lorsque plusieurs feuilles identiques sont empilées face encollée contre face non encollée, ou lorsque la feuille présente la forme d'un ruban qui est enroulé sur lui-même en rouleau.

Plus particulièrement, l'invention prévoit une feuille en un un matériau polymère alvéolaire à cellules au moins partiellement fermées, comportant une première face au moins partiellement enduite d'une couche de colle et une seconde face non encollée, opposée à la première face. Selon l'invention, la seconde face présente un relief obtenu par un traitement à chaud et comportant une pluralité de sommets répartis sur au moins une région de la seconde face, pour empêcher que des zones de la seconde face entre les sommets puissent être mis en contact avec la couche de colle déposée sur la première face d'une autre portion de feuille.

Selon un mode de réalisation de l'invention, les sommets formés sur la surface non encollée présentent une forme appartenant au groupe comportant, des formes pyramidales à bases polygonales, des formes coniques à bases circulaires et elliptiques, des formes arrondies, et des formes dont le sommet s'étend sur une arête.

Selon un mode de réalisation de l'invention, les bases des sommets formés sur la seconde face sont contigus.

Selon un mode de réalisation de l'invention, les bases des sommets formés sur la seconde face sont non contigus.

Selon un mode de réalisation de l'invention, les sommets présentent des formes et dimensions sensiblement identiques.

Selon un mode de réalisation de l'invention, la couche de colle est réalisée à l'aide d'une colle fortement réticulée applicable en phase solvant.

Selon un mode de réalisation de l'invention, la couche de colle est réalisée à l'aide d'une colle applicable par thermo-enduction.

Selon un mode de réalisation, la feuille selon l'invention est réalisée en polyoléfine.

Selon un mode de réalisation, la feuille selon l'invention est réalisée dans une matière polymère appartenant au groupe comprenant du polyéthylène, du polypropylène, ou du polyéthylène téréphtalate.

Selon un mode de réalisation, la feuille selon l'invention est enroulée sur elle-même en rouleau, sans film protecteur intermédiaire anti-adhérent.
L'invention concerne également un procédé de fabrication d'une feuille en un matériau polymère alvéolaire à cellules au moins partiellement fermées, le procédé comprenant une étape consistant à déposer une couche de colle sur au moins une partie d'une première face de la feuille.

Selon l'invention, le procédé comprend une étape consistant à former par un traitement à chaud sur une seconde face opposée à la première face un relief comportant une pluralité de sommets répartis sur au moins une région de la seconde face, pour empêcher que des zones de la seconde face entre les sommets puissent être mis en contact avec la couche de colle déposée sur la première face d'une autre portion de feuille.

Selon un mode de réalisation de l'invention, l'étape de formation du relief comportant des sommets sur la seconde face imprime également une forme non plane à la feuille.

Selon un mode de réalisation de l'invention, l'étape de formation du relief comportant des sommets sur la seconde face est réalisée par thermoformage.

Selon un mode de réalisation de l'invention, le thermoformage est réalisé à l'aide d'un moule comportant des parties en une matière poreuse.

Selon un mode de réalisation de l'invention, l'étape de formation du relief comportant des sommets est réalisée par thermocompression.

Selon un mode de réalisation de l'invention, l'étape de formation du relief comportant des sommets est réalisée à l'aide d'un moule qui chauffe davantage la matière de la feuille au niveau des sommets qu'au niveau de zones de la seconde face entre les sommets, de manière à ce que la matière constituant la feuille soit plus cohésive aux sommets qu'entre les sommets.

Selon un mode de réalisation de l'invention, le procédé comprend une étape de découpe de la feuille.

Selon un mode de réalisation de l'invention, le procédé comprend une étape d'enroulement de la feuille sur elle-même en rouleau.

Selon un mode de réalisation de l'invention, le procédé comprend en outre une étape d'empilement de la feuille sur une autre feuille identique, la face encollée venant se coller sur la face non encollée de l'autre feuille.

Ces objets, caractéristiques et avantages ainsi que d'autres de la présente invention seront exposés plus en détail dans la description suivante de l'invention faite à titre non limitatif en relation avec les figures jointes parmi lesquelles :
- la figure 1 représente en coupe transversale une feuille selon un premier mode de réalisation de l'invention ;
- la figure 2 représente en coupe transversale une feuille selon un second mode de réalisation de l'invention ;
- la figure 3 représente en vue de dessus la feuille montrée sur la figure 2 ;
- la figure 4 représente en coupe transversale une feuille selon un troisième mode de réalisation de l'invention ;
- la figure 5 représente en vue de profil plusieurs feuilles selon l'invention, empilées les unes sur les autres ;
- la figure 6 représente en vue de profil une feuille selon l'invention, enroulée sur une bobine ;

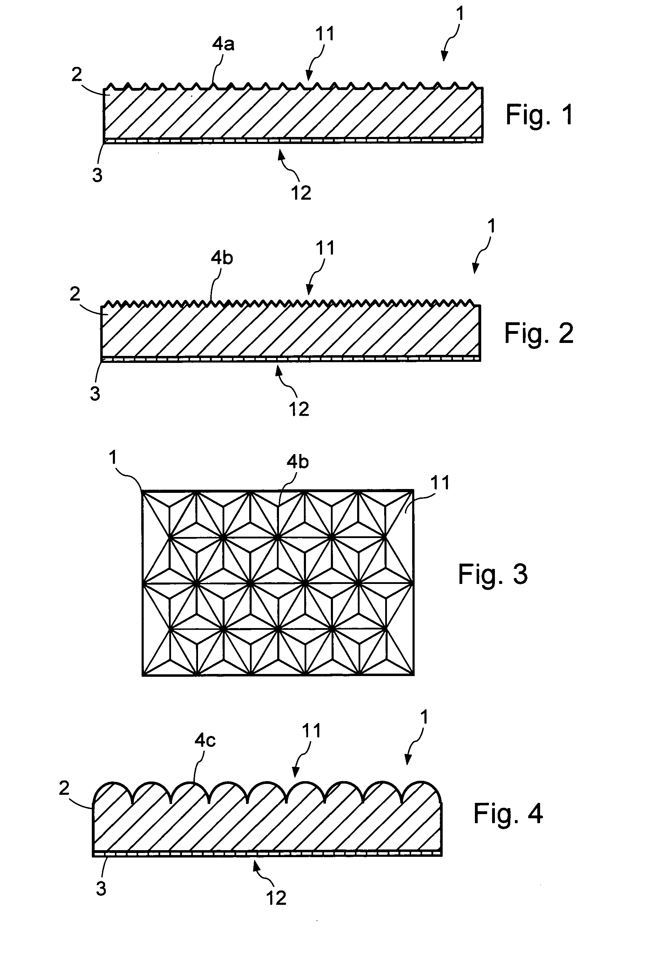

La feuille 1 représentée sur les figures 1 et 2 comprend une couche 2 en une matière polymère comportant une face 12 au moins partiellement enduite d'une couche de colle 3, et une face 11 non enduite de colle.

La feuille 1 est réalisée à partir d'une matière polymère en mousse (matière alvéolaire à cellules au moins partiellement fermées). Le polymère choisi est de préférence de la polyoléfine (polyéthylène, polypropylène, non réticulé ou réticulé physique ou chimique), ou du polyéthylène téréphtalate (PET) cristallisé ou semi-cristallisé.

La couche de colle 3 est réalisée de préférence à l'aide d'une colle présentant une forte cohésion (forte résistance au fluage). On peut choisir à cet effet, une colle applicable en phase solvant fortement réticulée, par exemple de type acrylique, ou une colle applicable par thermo-enduction (hot melt). La couche de colle est déposée sur la face 12 de la feuille 1 sous la forme d'un ou plusieurs cordons ou bandes, ou d'une couche d'épaisseur uniforme recouvrant la totalité de la face encollée 12.

Les zones encollées sont de préférence sensiblement lisses pour faciliter l'application de la couche de colle et assurer une bonne cohésion de celle-ci avec la face encollée de la feuille de mousse. Cette caractéristique est également souhaitable si la couche de colle doit assurer une certaine étanchéité.

Selon l'invention, la face 11 non encollée présente un relief comportant une multiplicité de sommets 4a, 4b, prévus pour s'appliquer contre les zones enduites de colle de la face 12 encollée, lorsque la feuille 1 est présentée sous forme d'une pile de feuilles ou d'une bande enroulée, de manière à limiter les zones de contacts entre la couche de colle 3 et la couche non encollée 11, uniquement aux sommets 4a, 4b du relief.

De préférence, les sommets 4a, 4b sont uniformément répartis sur toute la région de la face non encollée 11, opposée à la région enduite de colle de la face encollée 12. Egalement de préférence, les sommets 4a, 4b présentent des formes et dimensions identiques.

La couche de colle présente avantageusement une épaisseur suffisamment fine et/ou un fluage suffisamment réduit pour ne pas atteindre des zones de la face non encollée 11 situées entre les sommets 4a, 4b. En outre, si la face encollée 12 présente un relief, le relief formé sur la face non encollée 11 est réalisé pour éviter que la couche de colle atteigne des zones entre les sommets 4a, 4b de la face non encollée 11.

Les sommets 4a, 4b formés sur la face encollée 11 présentent une forme conique à base circulaire ou elliptique, ou une forme pyramidale à base triangulaire, rectangulaire ou plus généralement polygonale. On peut également envisager des formes dont le sommet s'étend sur une arête.

La pente (par rapport à un plan passant par la base du sommet) des sommets est choisie en fonction de la dureté et la rigidité de la matière constituant la feuille 1 et de la dureté de la couche de colle 3. Plus cette pente est importante, plus ces sommets sont pointus et donc plus ils seront fragiles (tendance à se courber) ou auront tendance à s'enfoncer dans la couche de colle et dans la face encollée 12. Plus cette pente est faible, plus la surface de contact du sommet avec la couche de colle peut être élevée. De préférence, cette pente est choisie comprise entre 40 et 50°. Alternativement, les sommets peuvent être arrondis pour éviter qu'ils s'enfoncent dans la couche de colle.

Dans un premier mode de réalisation illustré par la figure 1, les sommets 4a sont séparées les unes des autres par une surface sensiblement lisse.

Dans un second mode de réalisation illustré par la figure 2, les sommets 4b présentent une densité plus élevée de sorte que leurs bases respectives sont contiguës. Dans l'exemple de la figure 3, les sommets sont en forme de tétraèdre équilatéral et sont contigus.

D'une manière générale, la densité et la répartition des sommets 4a, 4b sur la surface de la face non encollée 11 sont prévues pour empêcher que des zones sensiblement planes de la face encollée 12 se collent entre les sommets 4a, 4b, soit du fait de la présence d'un relief sur la face encollée 2, soit par déformation de la feuille 1. La densité et la répartition des sommets 4a, 4b sur la face non encollée définissent la surface de contact entre la couche de colle 3 et la face non encollée 11, et donc sont choisies en fonction de la dureté et de la rigidité de la feuille 1. En effet, moins la densité des sommets 4a, 4b sur la face non encollée est importante, moins la surface de contact entre les faces non encollée et encollée est importante, et donc plus les sommets auront tendance à pénétrer sous l'effet d'une pression dans la matière constituant la colle et la face encollée, et plus la feuille 1 aura tendance à se déformer pour se coller entre les sommets. Pour limiter la pénétration des sommets dans la couche de colle 3 et dans la face encollée 12, on peut également prévoir une feuille 1c avec des sommets arrondis 4c comme illustré sur la figure 4. Comme précédemment, ces sommets peuvent être contigus (comme sur la figure 4) ou non.

La couche de colle 3 peut être appliquée par tout moyen approprié. Ainsi, on peut déposer la colle par sérigraphie ou à l'aide d'une filière à buse de forme appropriée pour réaliser un cordon. Si la couche de colle doit être déposée en bandes, ou recouvrir la totalité de la face encollée 12, on peut utiliser une filière à buse plate ou une racle dans le cas d'une colle à base solvant. La couche de colle peut également être déposée par transfert en la déposant préalablement en couche d'épaisseur régulière sur un support anti-adhérent. Après complexage de la feuille 1 et de la couche de colle, on retire le support anti-adhérent. On peut prévoir en outre d'appliquer à la face 12 à encoller un traitement préalable, tel qu'un traitement électrique corona, pour augmenter la tension de surface de la face à encoller, c'est-à-dire augmenter la cohésion de la couche de colle 3 sur cette face.

Le relief formé sur la face non encollée 11 est réalisé par un traitement à chaud tel que le thermoformage ou la thermocompression. Ce traitement peut être prévu également pour simultanément donner à la feuille 1 et à la face encollée 12 une forme distincte du relief, qui peut ne pas être plane. Le traitement de thermoformage consiste d'une manière classique à chauffer préalablement la feuille 1 dans un four, puis à appliquer la feuille à la sortie du four par dépression contre un moule refroidit, sans contre empreinte. Si la densité des sommets doit être élevée, on utilise de préférence un moule (par exemple réalisé au moins en partie en aluminium poreux) comportant une densité de pores élevée par l'intermédiaire desquels la dépression est réalisée, pour obtenir une répartition uniforme de la dépression afin d'obtenir les sommets 4a, 4b, 4c sur toute la surface à protéger de la feuille 1. Le traitement de thermoformage offre l'avantage de permettre d'appliquer la couche de colle 3 indifféremment avant ou après le traitement de mise en forme de la feuille 1 et de réalisation du relief sur la face non encollée 11.

Le traitement de thermocompression consiste à comprimer à chaud la feuille 1 dans un moule comportant une contre empreinte. Dans ce cas, l'encollage de la face 12 est effectué à la suite du traitement de réalisation du relief sur la face non encollée 11 et éventuellement de mise en forme de la feuille.

Avantageusement, le traitement de formation des sommets est effectué avec un moule qui chauffe davantage la matière de la feuille 1 au niveau de la partie supérieure des sommets qu'au niveau de la base des sommets, de manière à obtenir une matière plus dure et plus cohésive dans la partie supérieure des sommets qu'à la base des sommets, et ainsi éviter tout risque d'arrachement de la partie supérieure des sommets lors de la séparation de la face non encollée 11 et de la face encollée 12. Ce résultat est obtenu par exemple à l'aide d'un moule réalisé en plusieurs couches dont une couche externe formant la base des sommets 4a, 4b et une couche interne formant la partie supérieure des sommets. La couche interne du moule est portée à une température adéquate pour obtenir un durcissement de la matière constituant la feuille, tandis que la couche externe est à une température inférieure. Ce résultat est par exemple obtenu en utilisant pour la couche interne un matériau ayant une conductivité thermique supérieure à celle de la couche externe, et le cas échéant en disposant une couche thermiquement isolante entre la couche externe et la couche interne.

A la suite du traitement de formation des sommets, la feuille 1 subit un traitement de découpe à la forme souhaitée, par exemple au moyen d'une presse, d'un faisceau laser, d'un jet d'eau ou d'une fraise, puis est empilée sur d'autres feuilles identiques 1 fabriquées précédemment, la face encollée étant de préférence disposée vers le bas afin d'être protégée par la feuille sur laquelle elle est empilée.

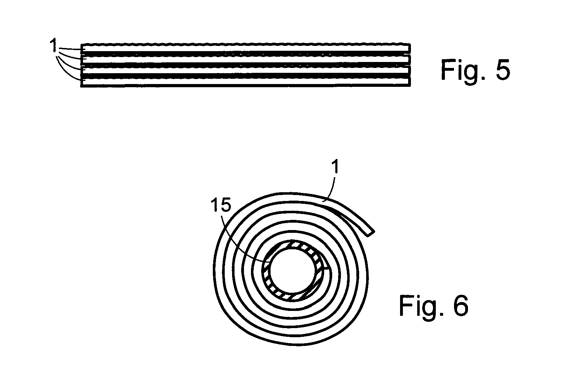

Avant d'être traitée, la feuille peut également se présenter sous la forme d'un rouleau. La feuille est alors déroulée pour être mise en forme et encollée, puis découpée à la forme des pièces souhaitées, les étapes d'encollage et de mise en forme étant effectuées dans un ordre adapté aux techniques mises en oeuvre. L'étape de découpe peut également être effectuée plus tard lors de l'utilisation de la feuille. Dans ce cas, la feuille 1 n'est pas mise en forme, seul le relief comportant les sommets 4a, 4b, 4c est réalisé. La feuille est ensuite enroulée sur elle-même autour d'une bobine 15 comme illustré sur la figure 6, en vue de son stockage et son transport, la face encollée 12 étant disposée de préférence vers l'intérieur afin d'être protégée. Lors de son utilisation, la feuille 1 est déroulée, puis découpée aux dimensions souhaitées et éventuellement mise en forme par un traitement de thermoformage.

Il apparaîtra clairement à l'homme de l'art que la feuille selon l'invention ainsi que son procédé de fabrication sont susceptibles de diverses variantes de réalisation. Ainsi, la forme, la densité ou la répartition des sommets sur la face non encollée sont susceptibles de variantes sans sortir du cadre de la présente invention définie par les revendications annexées.

## Revendications

1. Feuille (1) en un matériau polymère alvéolaire à cellules au moins partiellement fermées, comportant une première face (12) au moins partiellement enduite d'une couche de colle (3) et une seconde face (11) non encollée, opposée à la première face,
**caractérisé en ce que** la seconde face (11) présente un relief obtenu par un traitement à chaud appliqué à la feuille et comportant une pluralité de sommets (4a, 4b, 4c) répartis sur au moins une région de la seconde face, pour empêcher que des zones de la seconde face entre les sommets puissent être mis en contact avec la couche de colle déposée sur la première face d'une autre portion de feuille.

2. Feuille selon la revendication 1, dans laquelle les sommets (4a, 4b, 4c) formés sur la surface non encollée (11) présentent une forme appartenant au groupe comportant, des formes pyramidales à bases polygonales, des formes coniques à bases circulaires et elliptiques, des formes arrondies, et des formes dont le sommet s'étend sur une arête.

3. Feuille selon la revendication 1 ou 2, dans laquelle les bases des sommets (4a, 4b, 4c) formés sur la seconde face (11) sont contigus.

4. Feuille selon la revendication 1 ou 2, dans laquelle les bases des sommets (4a, 4b, 4c) formés sur la seconde face (11) sont non contigus.

5. Feuille selon l'une des revendications 1 à 4, dans laquelle les sommets présentent des formes et dimensions sensiblement identiques.

6. Feuille selon l'une des revendications 1 à 5, dans laquelle la couche de colle (3) est réalisée à l'aide d'une colle fortement réticulée applicable en phase solvant.

7. Feuille selon l'une des revendications 1 à 5, dans laquelle la couche de colle (3) est réalisée à l'aide d'une colle applicable par thermo-enduction.

8. Feuille selon l'une des revendications 1 à 7, dans laquelle le relief est réalisé par thermoformage ou thermocompression.

9. Feuille selon l'une des revendications 1 à 8, réalisée en polyoléfine.

10. Feuille selon l'une des revendications 1 à 9, réalisée dans une matière polymère appartenant au groupe comprenant du polyéthylène, du polypropylène, ou du polyéthylène téréphtalate (PET).

11. Feuille selon l'une des revendications 1 à 10, enroulée sur elle-même en rouleau, sans film protecteur intermédiaire anti-adhérent.

12. Procédé de fabrication d'une feuille (1) adhésive en un matériau polymère alvéolaire à cellules au moins partiellement fermées, le procédé comprenant une étape consistant à déposer une couche de colle (3) sur au moins une partie d'une première face (12) de la feuille,
**caractérisé en ce qu'**il comprend une étape consistant à former par un traitement à chaud sur une seconde face (11) de la feuille, opposée à la première face, un relief comportant une pluralité de sommets (4a, 4b, 4c) répartis sur au moins une région de la seconde face, pour empêcher que des zones de la seconde face entre les sommets puissent être mis en contact avec la couche de colle déposée sur la première face d'une autre portion de feuille.

13. Procédé selon la revendication 12, dans lequel l'étape de formation du relief comportant des sommets (4a, 4b, 4c) sur la seconde face (11) imprime également une forme non plane à la feuille.

14. Procédé selon l'une des revendications 12 à 13, dans lequel l'étape de formation du relief comportant des sommets (4a, 4b, 4c) sur la seconde face (11) est réalisée par thermoformage.

15. Procédé selon la revendication 14, dans lequel le thermoformage est réalisé à l'aide d'un moule comportant des parties en une matière poreuse.

16. Procédé selon l'une des revendications 12 à 13, dans lequel l'étape de formation du relief comportant des sommets (4a, 4b, 4c) est réalisée par thermocompression.

17. Procédé selon l'une des revendications 12 à 16, dans lequel l'étape de formation du relief comportant des sommets (4a, 4b, 4c) est réalisée à l'aide d'un moule qui chauffe davantage la matière de la feuille (1) au niveau des sommets qu'au niveau de zones de la seconde face entre les sommets, de manière à ce que la matière constituant la feuille soit plus cohésive aux sommets qu'entre les sommets.

18. Procédé selon l'une des revendications 12 à 17, comprenant en outre une étape de découpe de la feuille (1).

19. Procédé selon l'une des revendications 12 à 18, comprenant en outre une étape d'enroulement de la feuille (1) sur elle-même en rouleau.

20. Procédé selon l'une des revendications 12 à 18, comprenant en outre une étape d'empilement de la feuille (1) sur une autre feuille identique, la face encollée (12) venant se coller sur la face non encollée (11) de l'autre feuille.
